# EUROPEAN PATENT SPECIFICATION

(11) **EP 3 010 202 B1**
(45) Date of publication and mention of the grant of the patent: **04.12.2019**
(21) Application number: 15189028.2
(22) Date of filing: 08.10.2015
(51) Int. Cl.: H04L 29/06, H04L 9/08

(54) **SECURITY SYSTEM**
SICHERHEITSSYSTEM
SYSTEME DE SECURITE

(30) Priority: 16.10.2014 GB 201418361
(43) Date of publication of application: 20.04.2016
(73) Proprietor: Airbus Operations Limited, Bristol BS34 7PA (GB)
(72) Inventor: JONES, Kevin, London, WC2R 0AP (GB)
(74) Representative: Ribeiro, James Michael

(56) References cited:
- US-A- 5 983 350
- US-A1- 2007 067 837

## Description

### FIELD OF THE INVENTION

The present invention relates to access control and, more particularly, to a security system and a method for controlling access to a secure zone.

### BACKGROUND OF THE INVENTION

It is known to employ cryptographic techniques to restrict access to an area such as, for example, a restricted area of a computer network.

A known cryptographic technique uses public/private key cryptography, which uses two separate keys; one of which is made publically available, and the other of which is kept secret (or private). The public key and the private key form a key pair and are mathematically linked. Typically, the public key is used to encrypt data, such as an access code, and the private key is used to decrypt the data.

Public/private key cryptography is also known as asymmetric cryptography due to the requirement to use two different keys to the form the encryption and decryption steps.

Another known type of cryptography is known as symmetric key cryptography. In symmetric cryptography, the same cryptographic keys are used for encryption of the data and for decryption of the data. For symmetric key cryptography a first party encrypts data using symmetric key. That symmetric key is then shared with a second party with whom access to the data is to be granted. The second party is then able to use the same symmetric key to decrypt the encrypted data.

Both asymmetric and symmetric key cryptography have disadvantages. Asymmetric cryptography requires significant key management to ensure that each user to whom access is granted has a private key. Furthermore, if the access rights of that user are revoked, then user's private key must also be revoked to prevent any future unauthorised access. Similarly, symmetric key cryptography suffers from significant security risks because a key provided to a user might be stolen, or copied and distributed to an unauthorised user. In such a situation, all of the symmetric keys would need to be replaced to prevent unauthorised access.

US 5,983,350 discloses a system and method for regulating the flow of messages through a firewall having a network protocol stack, wherein the network protocol stack includes an Internet Protocol (IP) layer, the method comprising establishing a security policy, determining, at the IP layer, if a message is encrypted, if the message is not encrypted, passing the unencrypted message up the network protocol stack to an application level proxy, and if the message is encrypted, decrypting the message and passing the decrypted message up the network protocol stack to the application level proxy, wherein decrypting the message includes executing a process at the IP layer to decrypt the message.

### SUMMARY OF THE INVENTION

A first aspect of the invention provides a security system comprising a secure zone, user access to which is restricted; a first gateway encrypted using a first encryption algorithm; and a second gateway encrypted using a second encryption algorithm; wherein the first gateway is configured to restrict access to the second gateway, the second gateway being accessible via the first gateway with a first key; wherein the second gateway is configured to restrict access to the secure zone, the secure zone being accessible via the second gateway with a second key; and wherein the first encryption algorithm is different from the second encryption algorithm.

The second encryption algorithm may comprise a symmetric encryption algorithm and the second key may comprise a symmetric key.

The first encryption algorithm may comprise a one-time pad encryption algorithm and the first key may comprise a one-time pad key.

The security system may further comprise a key generator for generating at least one of the first key and the second key.

The security system may further comprise an access control manager for controlling access through at least one of the first gateway and the second gateway based on access rights of a user attempting to gain access to the secure zone.

Access to at least one of the first gateway and the second gateway may be time-limited. In a similar manner, at least one of the first key and the second key may be valid for a limited duration. When said limited duration has expired, access via at least one of the first gateway and the second gateway may be prevented.

The secure zone may comprise a plurality of secure zones accessible via the first gateway. A separate key may be required to access each of the plurality of secure zones via the first gateway.

A further aspect of the invention provides a method of granting a user access to a secure zone in a security system, the method comprising: generating a first encryption key for accessing a first gateway; generating a second encryption key for accessing a second gateway; and providing the first encryption key and the second encryption key to a user attempting to access the secure zone; wherein the second gateway is accessible via the first gateway, and the secure zone is accessible via the second gateway; and wherein the first encryption key is different from the second encryption key.

The method may further comprise querying an access control manager to determine whether or not the user is authorized to access the secure zone. If it is determined that the user is not authorized to access the secure zone, then the user may be prevented from accessing the secure zone via at least one of the first gateway and the second gateway.

The method may further comprise determining whether or not the user is subject to any access restrictions. If it is determined that the user is subject to access restrictions, then those access restrictions may be applied to at least one of the first encryption key and the second encryption key.

The method may further comprise converting the first encryption key into the second encryption key if access to the first gateway has been granted using the first encryption key.

The method may further comprise applying an access duration limitation to at least one of the first key and the second key. If the access duration has expired, then the method may prevent further access using the key to which the limitation has been applied.

Other features of the invention will be become apparent from the following description.

### BRIEF DESCRIPTION OF THE DRAWINGS

Embodiments of the invention will now be described with reference to the accompanying drawings, in which:
Figure 1 is a schematic view of an exemplary computer system architecture;
Figure 2 a schematic view of a security system constructed in accordance with embodiments of the invention;
Figure 3 is a schematic view of a security system constructed in accordance with alternative embodiments of the invention; and
Figure 4 is a flow diagram outlining the steps of a method in accordance with embodiments of the invention.

### DETAILED DESCRIPTION OF EMBODIMENT(S)

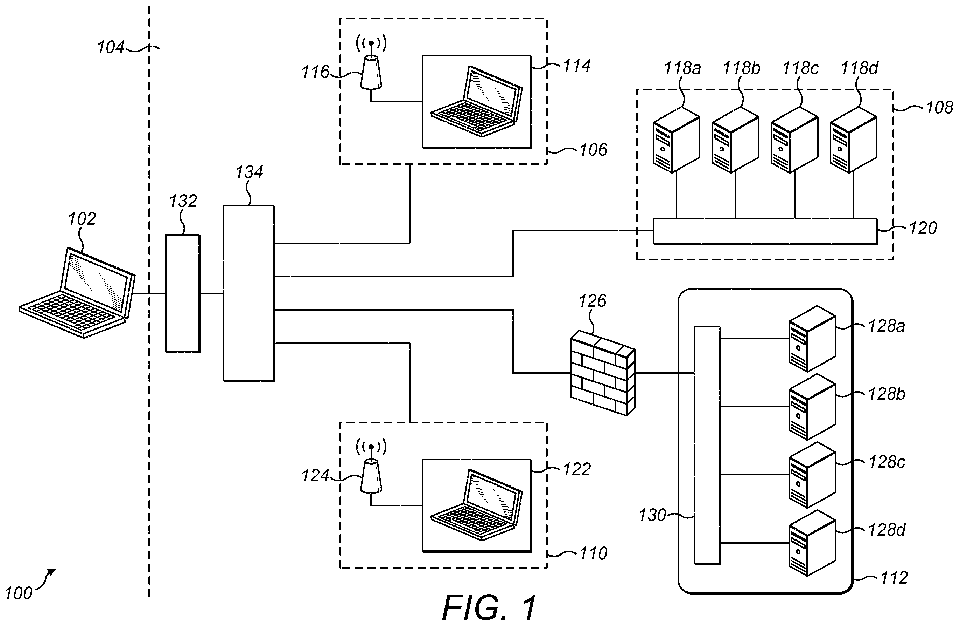

Referring to the drawings, Figure 1 shows an exemplary computer system architecture 100 incorporating the present invention.

In the example depicted in Figure 1, a user of a computer 102 may wish to access one or more restricted or unrestricted areas of the system architecture 100. The computer 102 is depicted as a laptop computer, but a user might use any other type of computer access device, such as a desktop computer, a tablet computer or a smartphone. The computer 102 is, in this embodiment, used to gain access to one or more areas within a network 104 depicted by a dashed line. The network 104 might be a, for example, a computer network within an office or a company, or a larger scale network, such as a national infrastructure. The network 104 includes three secure zones, 106, 108 and 110. The network 104 also includes a firewall-protected zone 112 which is protected using a standard firewall, but is not secured in the same manner as the secure zones 106, 108 and 110, as will be discussed below.

The secure zones 106, 108 and 110 may be arranged and connected in any manner, with each secure zone defining an area of the network to which access should be restricted for particular users. In this embodiment, the secure zone 106 is a sub-network 114 of computers located remotely from the secure zones 108 and 110, and connected to the rest of the network 104 via, for example, an antenna 116.

The secure zone 108 is, in this embodiment, a control system sub-network of computers 118a, 118b, 118c and 118d. The computers 118a-d in the control system sub-network are connected to one another via a control system local area network (LAN) 120. Each of the computers 118a-d represents a server or computer having a particular function, such as, for example, a data acquisition server, an application server, a data server, a configuration server, a user work station or an engineering work station.

The secure zone 110 is similar to the secure zone 106 and includes a sub-network 122 of computers located remotely from the secure zones 106 and 108, and in communication with the rest of the network 104 via an antenna 124.

The firewall-protected zone 112 is not subject to the same level of protection as the secure zones 106, 108 and 110. The firewall-protected zone 112 is located behind a firewall 126, which is configured to control network traffic going into and out from the firewall-protected zone. The firewall-protected zone 112 incudes individual computers 128a, 128b, 128c and 128d, each of which has a particular function. For example, one or more of the computers 128a-d might function as a business communication server, a World Wide Web (WWW) server, a security server, an authentication server, a business user work station, or a corporate server. The computers 128a-d are connected to one another via a corporate LAN 130.

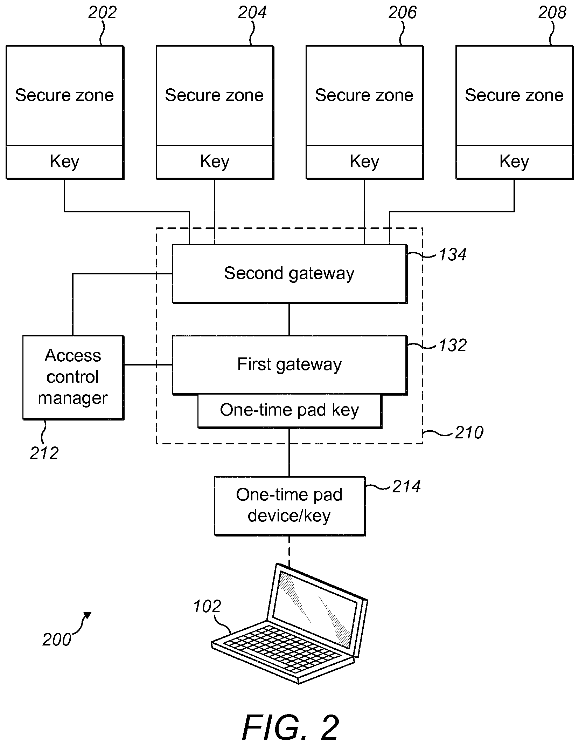

In order for the computer 102 to access one or more of the secure zones 106, 108 and 110 or the firewall-protected zone 112, access must first be granted to the network 104. Access to the network 104 is restricted by first cryptographic gateway 132, which prevents access to any zones within the network unless a user has been granted sufficient access rights. The first cryptographic gateway 132 forms a first level of security, and will be discussed in greater detail with reference to Figures 2, 3 and 4.

If the user of the computer 102 has been granted sufficient access rights that allow him or her to gain access to the network 104, such as access to the secure zones 106, 108 or 110 or to the firewall-protected zone 112 is restricted by a second cryptographic gateway 134. If the user of the computer 102 has been granted sufficient access rights to allow him or her to access at least one of the secure zones 106, 108 or 110 or to access the firewall-protected 112, then access to one or more of these zones will be granted via the second cryptographic gateway 134. Thus, the user of the computer 102 attempting to access a restricted zone within the network 104 must have sufficient access rights to get through two levels of security, namely the first cryptographic gateway 132 and the second cryptographic gateway 134.

Each of the cryptographic gateways 132, 134 uses a cryptographic algorithm to restrict access therethrough. In this embodiment, the first cryptographic gateway 132 uses a first cryptographic key, and the second cryptographic gateway 134 uses a second cryptographic key, as will be discussed with reference to Figures 2, 3 and 4.

The term "gateway" used herein is intended to mean a component within a computer network through which network traffic is routed, and which can be configured to restrict and/or to allow access therethrough. While, in the embodiments described herein, the system 100 includes two separate gateways (that is, a first gateway 132 and a second gateway 134), in other embodiments, the system might include a single gateway (not shown). In those embodiments, the first and second gateways represent two different sides or parts of the single gateway.

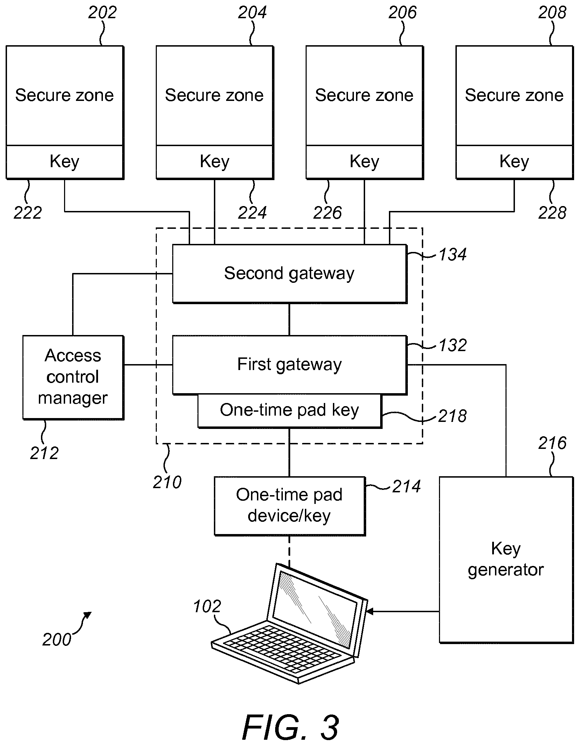

Reference is now made to Figures 2 and 3, which show, schematically, a security system 200 constructed in accordance with embodiments of the present invention.

Figure 2 shows a security system 200 having secure zones 202, 204, 206 and 208. A user of the computer 102 wishes to gain access to one or more of the secure zones 202 to 208. Access to the secure zones 202 to 208 is restricted by the first cryptographic gateway 132 and the second cryptographic gateway 134. While the first and second gateways 132, 134 have been depicted as separate elements in this embodiment, it will be appreciated that, in other embodiments, the first and second gateways may be combined in to a single cryptographic gateway, depicted in Figure 2 by a dashed line 210.

An access control manager 212 is in communication with the first gateway 132 and the second gateway 134, and serves to control access through the first and second gateways based on access rights of the user. The access control manager 212 may be implemented on a computer in physical communication with the first and second gateways 132, 134 or remotely, and in communication with the first and second gateways via a wireless network (not shown).

As is discussed above, the first cryptographic gateway 132 provides a first level of security for the secure zones 202 to 208, and the second cryptographic gateway 134 provides a second level of security for the secure zones. A user wishing to gain access to one or more of the secure zones 202 to 208 must have sufficient access rights to get through both the first cryptographic gateway 132 and the second cryptographic gateway 134.

In this embodiment, the first cryptographic gateway utilises a one-time pad encryption technique. A user wishing to gain access to one or more of the secure zones 202 to 208 using the computer 102 is provided with a one-time pad key 214 either via the computer 102 or via a one-time pad device. As will be apparent to those skilled in the art, a one-time pad key can be used only once, after which a new one-time pad key must be generated.

When a user requests access to the network 104 and to one or more of the secure zones 202 to 208, the computer 102 communicates with the access control manager 212, and the access control manager determines whether or not the computer 102 (or the user of the computer) has access rights to access the network and, if so, which (if any) secure zones the user is authorised to access. In some embodiments, the access control manager 212 queries a data store, to determine the access rights of the user. The data store may take the form of a database or lookup table stored on a memory of a computer or server, and the data store may include information such as details of multiple users, credentials of the users, and information regarding which secure zones 202 to 208 each user is authorised to access.

In an alternative embodiment shown in Figure 3, the computer 102 may communicate directly with a key generator 216 via a wired connection or via a wireless connection. In this embodiment, the key generator 216 communicates directly with the access control manager 212 to query the access rights of the user of the computer 102.

In yet a further alternative embodiment, the key generator 216 is provided with, or has access to, a data store containing information regarding the access rights of users of the system 200. In this embodiment, the key generator 216 determines whether or not the user of the computer 102 is authorised to access the network 104 via the first gateway 132. If the key generator 216 determines that the user of the computer 102 is authorised to access the network 104, then the key generator generates a one-time key 214 and issues the one-time pad key to the user via the user computer 102. The one-time pad key 214 provided to the computer 102 corresponds to a one-time pad key 218 associated with the first gateway 132. The user of the computer 102 is able to attempt to log into the first gateway 132 using the generated one-time pad key 214 and, if the one-time pad key 214 matches the one-time pad key 218 of the first gateway 132, then access to the first gateway is granted. The access control manager 212 then communicates with the first gateway 132 to provide details of which (if any) of the secure zones 202 to 208 the user of the computer 102 is authorised to access. If the user of the computer 102 is authorised to access at least one of the secure zones 202 to 208, then the user of the computer is granted access to the relevant secure zone or zones via the second gateway 134. In one embodiment, the access control manager 212 is able to route the user to the relevant secure zone or zones using the one-time pad key 218 since the access control manager is can determine the access rights of the user and provide him or her the necessary key or keys required to gain access through the second gateway.

In an alternative embodiment, a key or multiple keys corresponding to the keys 222 to 228 of the secure zones 202 to 208 may be generated by the key generator 216, and issued to the user computer 102. In yet another embodiment, the one-time pad key 214 which is used to access the first gateway 132, can be converted into one or more keys for accessing the secure zones via the second gateway 134.

As is shown in Figure 3, each secure zone 202 to 208 has an associated key. Specifically, the secure zone 202 has an associated key 222, the secure zone 204 has an associated key 224, the secure zone 206 has an associated zone 226 and the secure zone 208 has an associated key 228. In some embodiments, each secure zone has its own associated key and, therefore, a user wishing to access multiple secure zones must be issued with a key associated with each secure zone. In other embodiments, multiple secure zones may be grouped together such that one key may be generated which provides access to the group of secure zones. Similarly, in a further alternative embodiment, a single key may be provided which allows unrestricted access to all of the secure zones.

The key or keys used to access the secure zones 202 to 208 via the second gateway 134 are, in this embodiment, symmetric keys. That is to say that the key or keys issued to the user computer 102 for gaining access through the second gateway 134 are the same as the keys 222 to 228 associated with the secure zones. The symmetric key pairs used for accessing the secure zones 202 to 208 are kept secret, and are used only for computers that are within the secure network 104. In other words, the symmetric keys are issued only to computers which have accessed the first gateway 132.

In summary, therefore, two different types of key are required in order to gain access to one or more of the secure zones 202 to 208; a one-time pad key is required to gain access to the first gateway 132, and at least one symmetric key is required to gain access to the second gateway 134.

In some embodiments, the keys issued to the user computer 102 include additional restrictions or limitations on the access provided to the user computer 102. For example, in one embodiment, the one-time pad key is further restricted by a time limit, meaning that the one-time pad key is valid only for a finite duration of time, for example 24 hours. Upon expiry of the time limit, the one-time pad key expires, and can no longer be used to access the first gateway 132.

In some embodiments, upon expiry of a time limit of the one-time pad key, a user computer 102 which has accessed the network 104 is automatically logged off the network, and its access rights are automatically revoked. This prevents any user computer 102 from continuing to access the secure network 104 or one of the secure zones 202 to 208 beyond the period of time that access has been authorised.

If no time restrictions or duration restrictions are imposed on the one-time pad key, then access to the network 104 or to the secure zones 202 to 208 is automatically revoked when the user of the computer 102 logs out of the network.

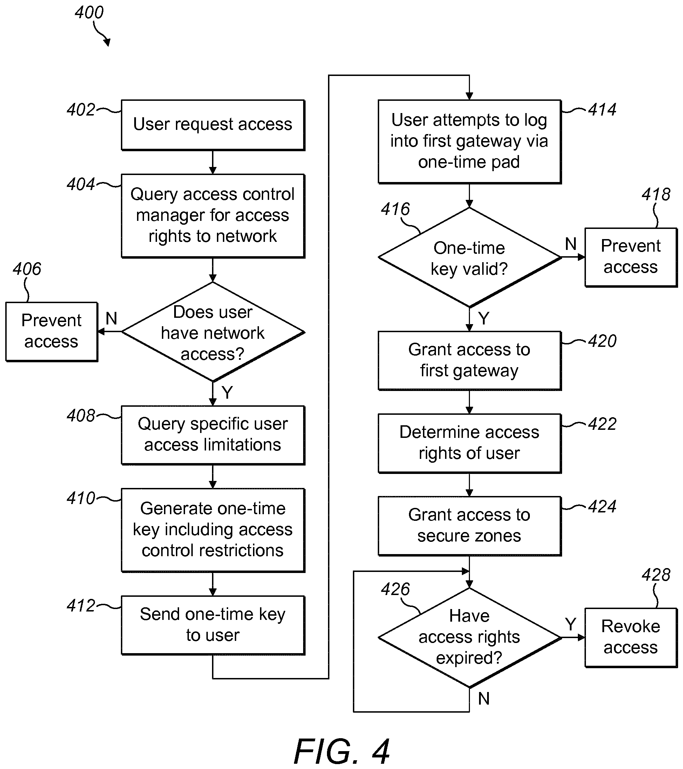

Reference is now made to Figure 4, which is a flow diagram detailing various steps of a method for controlling access to one or more secure zones.

At step 402, a user requests access to one or more secure zones, such as the secure zones 202 to 208, using the computer 102. The request by the user computer 102 may be made to the access control manager 212 or, in an alternative embodiment, to the key generator 216. The access control manager 212 is then queried (step 404) to determine the access rights of the user computer 102. If it is determined that the user computer 102 does not have access to the requested zones, then access to the network 104 is prevented (step 406). If, however, it is determined that the user computer 102 does have access to the requested zone, then the access control manager 212 determines whether or not the user computer is subject to any specific access limitations (step 408), such as time limitations.

At step 410, the key generator 216 generates a one-time pad key 214 which includes any user access limitations determined during step 408.

The one-time pad key generated in step 410 is then sent to the user computer 102 (step 412). In step 414, the user of the user computer 102 attempts to log into the first gateway 132 using the one-time pad key 214. When a user or a computer, such as the user computer 102, attempts to access the first gateway 132 with the one-time pad key 214, the access control manager 212 determines whether or not the one-time pad key is valid (step 416). If the access control manager 212 determines that the one-time pad key is not valid, then the access control manager prevents the user computer 102 from accessing the first gateway 132 (step 418). If, however, the access control manager 212 determines that the one-time pad key is valid, then access to the first gateway 132 is granted to the user computer 102 (step 420).

Once an authorised user of the user computer has been granted access to the first gateway 132, the access control manager 212 determines the specific access rights of the user computer, and determines which (if any) of the secure zones 202 to 208 the user computer 102 is authorised to access (step 422). The access control manager 212 then grants the user access (step 424) to the relevant secure zones via the second gateway 134 by routing the user through the second gateway. In some embodiments, as is noted above, the access control manager 212 communicates to the key generator 216 which secure zones 202 to 208 the user computer 202 is authorised to access, and the key generator converts the previously-generated one-time pad key 214 into the key or keys required to access the second gateway 134.

Some keys generated by the key generator 216 may be subject to time limitations, such as restrictions on the length of time that a key can be used to access the first gateway 132 and/or the second gateway 134. The access control manager 212 monitors any user computers that have been granted access to the first gateway 132 and the second gateway 134, and determines regularly whether any of the access keys have expired (step 426). If a key has expired through exceeding the duration for which access was granted, then access to the first gateway 132 and/or the second gateway 134 is revoked (step 428). If access is revoked, then the user computer 102 may be automatically disconnected from the network 104. If, at step 424, it is determined that the access for the computer 102 has not expired, then the computer is able to remain connected to the secured network 104.

Although the invention has been described above with reference to one or more preferred embodiments, it will be appreciated that various changes or modifications may be made without departing from the scope of the invention as defined in the appended claims.

## Claims

1. A security system comprising:
a secure zone, user access to which is restricted;
a first gateway configured to use a first encryption algorithm; and
a second gateway configured to use a second encryption algorithm;
wherein the first gateway is configured to restrict access to the second gateway, the second gateway being accessible via the first gateway with a first key;
wherein the second gateway is configured to restrict access to the secure zone, the secure zone being accessible via the second gateway with a second key; and
wherein the first encryption algorithm is different from the second encryption algorithm.

2. A security system according to claim 1, wherein the second encryption algorithm comprises a symmetric encryption algorithm and the second key comprises a symmetric key.

3. A security system according to claim 1 or claim 2, wherein the first encryption algorithm comprises a one-time pad encryption algorithm and the first key comprises a one-time pad key.

4. A security system according to any of the preceding claims, further comprising a key generator for generating at least one of the first key and the second key.

5. A security system according to any of any of the preceding claims, further comprising an access control manager for controlling access through at least one of the first gateway and the second gateway based on access rights of a user attempting to gain access to the secure zone.

6. A security system according to any of any of the preceding claims, wherein access to at least one of the first gateway and the second gateway is time-limited.

7. A security system according to claim 6, wherein at least one of the first key and the second key is valid for a limited duration.

8. A security system according to claim 7, wherein, when said limited duration has expired, access via at least one of the first gateway and the second gateway is prevented.

9. A security system according to any of any of the preceding claims, wherein the secure zone comprises a plurality of secure zones accessible via the first gateway, and wherein a separate key is required to access each of the plurality of secure zones via the first gateway.

10. A method of granting a user access to a secure zone in a security system, the method comprising:
generating a first encryption key for accessing a first gateway;
generating a second encryption key for accessing a second gateway; and
providing the first encryption key and the second encryption key to a user attempting to access the secure zone;
wherein the second gateway is accessible via the first gateway, and the secure zone is accessible via the second gateway; and
wherein the first encryption key is different from the second encryption key.

11. A method according to claim 10, further comprising:
querying an access control manager to determine whether or not the user is authorized to access the secure zone.

12. A method according to claim 11, wherein, if it is determined that the user is not authorized to access the secure zone, then the user is prevented from accessing the secure zone via at least one of the first gateway and the second gateway.

13. A method according to any of claims 10 to 12, further comprising:
determining whether or not the user is subject to any access restrictions;
wherein, if it is determined that the user is subject to access restrictions, then applying those access restrictions to at least one of the first encryption key and the second encryption key.

14. A method according to any of claims 10 to 13, wherein, if access to the first gateway has been granted using the first encryption key, then the first encryption key is converted into the second encryption key.

15. A method according to any of claims 10 to 14, further comprising:
applying an access duration limitation to at least one of the first key and the second key; and
if the access duration has expired, then preventing further access using the key to which the limitation has been applied.

## Patentansprüche

1. Sicherheitssystem, umfassend:
eine Sicherheitszone, deren Nutzerzugang eingeschränkt ist,
eine erste Schnittstelle, die dazu beschaffen ist, einen ersten Verschlüsselungsalgorithmus zu verwenden, und
eine zweite Schnittstelle, die dazu beschaffen ist, einen zweiten Verschlüsselungsalgorithmus zu verwenden,
wobei die erste Schnittstelle dazu beschaffen ist, den Zugang zur zweiten Schnittstelle zu beschränken, wobei die zweite Schnittstelle über die erste Schnittstelle mit einem ersten Schlüssel zugänglich ist,
wobei die zweite Schnittstelle dazu beschaffen ist, den Zugang zur Sicherheitszone zu beschränken, wobei die Sicherheitszone über die zweite Schnittstelle mit einem zweiten Schlüssel zugänglich ist, und
wobei sich der erste Verschlüsselungsalgorithmus vom zweiten Verschlüsselungsalgorithmus unterscheidet.

2. Sicherheitssystem nach Anspruch 1, wobei der zweite Verschlüsselungsalgorithmus einen symmetrischen Verschlüsselungsalgorithmus umfasst und der zweite Schlüssel einen symmetrischen Schlüssel umfasst.

3. Sicherheitssystem nach Anspruch 1 oder Anspruch 2, wobei der erste Verschlüsselungsalgorithmus einen Einmalverschlüsselungsalgorithmus umfasst und der erste Schlüssel einen Einmalschlüssel umfasst.

4. Sicherheitssystem nach einem der vorherigen Ansprüche, ferner umfassend eine Schlüsselgenerator zum Erzeugen des ersten und/oder des zweiten Schlüssels.

5. Sicherheitssystem nach einem der vorherigen Ansprüche, ferner umfassend einen Zugangssteuerungsmanager zum Steuern des Zugangs über die erste und/oder die zweite Schnittstelle auf der Grundlage von Zugangsrechten eines Nutzers, der versucht, Zugang zur Sicherheitszone zu erlangen.

6. Sicherheitssystem nach einem der vorherigen Ansprüche, wobei der Zugang zur ersten und/oder zur zweiten Schnittstelle zeitlich begrenzt ist.

7. Sicherheitssystem nach Anspruch 6, wobei der erste und/oder der zweite Schlüssel für eine begrenzte Zeitdauer gültig ist.

8. Sicherheitssystem nach Anspruch 7, wobei der Zugang über die erste und/oder die zweite Schnittstelle verhindert wird, wenn die begrenzte Zeitdauer abgelaufen ist.

9. Sicherheitssystem nach einem der vorherigen Ansprüche, wobei die Sicherheitszone eine Vielzahl von Sicherheitszonen umfasst, die über die erste Schnittstelle zugänglich sind, und wobei ein separater Schlüssel erforderlich ist, um auf jede aus der Vielzahl von Sicherheitszonen über die erste Schnittstelle zuzugreifen.

10. Verfahren zum Gewähren eines Nutzerzugangs zu einer Sicherheitszone in einem Sicherheitssystem, das Verfahren umfassend:
Erzeugen eines ersten Chiffrierschlüssels für den Zugang zu einer ersten Schnittstelle,
Erzeugen eines zweiten Chiffrierschlüssels für den Zugang zu einer zweiten Schnittstelle, und
Bereitstellen des ersten Chiffrierschlüssels und des zweiten Chiffrierschlüssels an einen Nutzer, der versucht, Zugang zur Sicherheitszone zu erlangen,
wobei die zweite Schnittstelle über die erste Schnittstelle zugänglich ist und die Sicherheitszone über die zweite Schnittstelle zugänglich ist, und
wobei sich der erste Chiffrierschlüssel vom zweiten Chiffrierschlüssel unterscheidet.

11. Verfahren nach Anspruch 10, ferner umfassend:
Befragen eines Zugangssteuerungsmanagers, um zu bestimmen, ob der Nutzer autorisiert ist, auf die Sicherheitszone zuzugreifen oder nicht.

12. Verfahren nach Anspruch 11, wobei der Nutzer davon abgehalten wird, auf die Sicherheitszone über die erste Schnittstelle und/oder die zweite Schnittstelle zuzugreifen, wenn bestimmt wird, dass der Nutzer nicht autorisiert ist, auf die Sicherheitszone zuzugreifen.

13. Verfahren nach einem der Ansprüche 10 bis 12, ferner umfassend:
Bestimmen, ob der Nutzer irgendwelchen Zugangsbeschränkungen unterliegt oder nicht,
wobei, wenn bestimmt wird, dass der Nutzer Zugangsbeschränkungen unterliegt, diese Zugangsbeschränkungen auf den ersten Chiffrierschlüssel und/oder den zweiten Chiffrierschlüssel angewendet werden.

14. Verfahren nach einem der Ansprüche 10 bis 13, wobei der erste Chiffrierschlüssel in den zweiten Chiffrierschlüssel umgewandelt wird, wenn der Zugang zur ersten Schnittstelle unter Verwendung des ersten Chiffrierschlüssels gewährt wurde.

15. Verfahren nach einem der Ansprüche 10 bis 14, ferner umfassend:
Anwenden einer Zugangsdauerbegrenzung auf den ersten Schlüssel und/oder den zweiten Schlüssel und
Verhindern eines weiteren Zugangs unter Verwendung des Schlüssels, auf den die Begrenzung angewendet worden ist, wenn die Zugangsdauer abgelaufen ist.

## Revendications

1. Système de sécurité comprenant :
une zone protégée, l'accès d'utilisateur à laquelle est restreint,
une première passerelle configurée pour utiliser un premier algorithme de cryptage et
une seconde passerelle configurée pour utiliser un second algorithme de cryptage,
la première passerelle étant configurée pour restreindre l'accès à la seconde passerelle, la seconde passerelle étant accessible via la première passerelle avec une première clé,
la seconde passerelle étant configurée pour restreindre l'accès à la zone protégée, la zone protégée étant accessible via la seconde passerelle avec une seconde clé, et
le premier algorithme de cryptage étant différent du second algorithme de cryptage.

2. Système de sécurité suivant la revendication 1, dans lequel le second algorithme de cryptage comprend un algorithme de cryptage symétrique et la seconde clé comprend une clé symétrique.

3. Système de sécurité suivant la revendication 1 ou 2, dans lequel le premier algorithme de cryptage comprend un algorithme de cryptage de clé unique et la première clé comprend une clé unique.

4. Système de sécurité suivant une des revendications précédentes, le système comprenant en plus un générateur de clé pour générer au moins une parmi la première clé et la seconde clé.

5. Système de sécurité suivant une des revendications précédentes, le système comprenant en plus un gestionnaire de contrôle d'accès pour contrôler l'accès à travers au moins une parmi la première passerelle et la seconde passerelle sur la base de droits d'accès d'un utilisateur tentant d'accéder à la zone protégée.

6. Système de sécurité suivant une des revendications précédentes, dans lequel l'accès à au moins une parmi la première passerelle et la seconde passerelle est limité.

7. Système de sécurité suivant la revendications 6, dans lequel au moins une parmi la première clé et la seconde clé est valide pour une durée limitée.

8. Système de sécurité suivant la revendication 7, dans lequel, une fois la durée limitée expirée, l'accès via au moins une parmi la première passerelle et la seconde passerelle est empêché.

9. Système de sécurité suivant une des revendications précédentes, dans lequel la zone protégée comprend une pluralité de zones protégées accessibles via la première passerelle et dans lequel une clé séparée et nécessaire pour accéder à chacune parmi la pluralité de zones protégées via la première passerelle.

10. Procédé destiné à accorder à un utilisateur l'accès à une zone protégée dans un système de sécurité, le procédé comprenant :
la génération d'une première clé de cryptage pour accéder à une première passerelle,
la génération d'une seconde clé de cryptage pour accéder à une seconde passerelle, et
la fourniture de la première clé de cryptage et de la seconde clé de cryptage à un utilisateur tentant d'accéder à la zone protégée,
la seconde passerelle étant accessible via la première passerelle et la zone protégée étant accessible via la seconde passerelle, et
la première clé de cryptage étant différente de la seconde clé de cryptage.

11. Procédé suivant la revendication 10, le procédé comprenant en plus :
l'interrogation d'un gestionnaire de contrôle d'accès pour déterminer si oui ou non l'utilisateur est autorisé à accéder à la zone protégée.

12. Procédé suivant la revendication 11, dans lequel, l'utilisateur est empêché d'accéder à la zone protégée via au moins une parmi la première passerelle et la seconde passerelle, s'il a été déterminé qu'il n'est pas autorisé à accéder à la zone protégée.

13. Procédé suivant une des revendications 10 à 12, le procédé comprenant en plus :
la détermination de ce que oui ou non l'utilisateur est soumis à des restrictions d'accès,
l'application de ces restrictions d'accès à au moins une parmi la première clé de cryptage et la seconde clé de cryptage, s'il a été déterminé que l'utilisateur est soumis à des restrictions d'accès.

14. Procédé suivant une des revendications 10 à 13, dans lequel, la première clé de cryptage est convertie en seconde clé de cryptage, si l'accès à la première passerelle a été accordé en utilisant la première clé de cryptage.

15. Procédé suivant une des revendications 10 à 14, le procédé comprenant en plus :
l'application d'une limitation de durée d'accès à au moins une parmi la première clé et la seconde clé, et
l'empêchement de tout autre accès en utilisant la clé à laquelle la limitation a été appliquée, une fois la durée d'accès expirée.
